# EUROPÄISCHE PATENTSCHRIFT

(11) **EP 3 421 170 B1**
(45) Veröffentlichungstag und Bekanntmachung des Hinweises auf die Patenterteilung: **12.10.2022**
(21) Anmeldenummer: 17178289.9
(22) Anmeldetag: 28.06.2017
(51) Int. Cl.: B23K 26/073, G02B 26/08, G02B 26/10

(54) **VORRICHTUNG ZUM BOHREN UND/ODER FÜR MATERIALABTRAGUNG MITTELS LASERSTRAHLUNG ; VERWENDUNG SOLCHER VORRICHTUNG ZUM BOHREN UND/ODER FÜR MATERIALABTRAGUNG MITTELS LASERSTRAHLUNG ; VERFAHREN ZUR MONTAGE EINES PORROPRISMAS IN EINER ROTATIONSEINHEIT**
DEVICE FOR DRILLING AND/OR FOR REMOVING MATERIAL BY MEANS OF LASER BEAMS ; USE OF SUCH DEVICE FOR DRILLING AND/OR FOR REMOVING MATERIAL BY MEANS OF LASER BEAMS ; METHOD FOR MOUNTING A PORRO PRISM IN A ROTARY UNIT
DISPOSITIF DE PERÇAGE ET/OU D'ENLÈVEMENT DE MATIÈRE E AU MOYEN DU RAYON LASER ; UTILISATION D'UN TEL DISPOSITIF POUR LE PERÇAGE ET/OU L'ENLÈVEMENT DE MATIÈRE E AU MOYEN DU RAYON LASER ; PROCÉDÉ DE MONTAGE D'UN PRISME DE PORRO DANS UNE UNITÉ DE ROTATION

(43) Veröffentlichungstag der Anmeldung: 02.01.2019
(73) Patentinhaber: Fisba AG, 9016 St. Gallen (CH)
(72) Erfinder: Langenbach, Eckhard, 9037 Speicherschwendi (CH)
(74) Vertreter: Hepp Wenger Ryffel AG

(56) Entgegenhaltungen:
- EP-A1- 2 684 636
- DE-A1-102012 003 536
- US-A- 4 154 507
- US-A- 5 170 278
- ANDREW LYNCH ET AL: "Strahlablenkung: Prismen und Spiegel im Vergleich", PHOTONIK, Nr. 3, 31. Dezember 2009 (2009-12-31), Seiten 50-54, XP055286604,

## Beschreibung

Die Anmeldung betrifft eine Vorrichtung zum Bohren und/ oder für Materialabtragung mittels Laserstrahlung, eine Verwendung dieser Vorrichtung zum Bohren und/oder zur Materialabtragung mittels Laserstrahlen und ein Verfahren zur Montage eines Porroprismas in einer Rotationseinheit (siehe z.B. US 4 154 507 A, Basis für den Oberbegriff der Ansprüche 1 und 13).

Aus dem Stand der Technik sind Vorrichtungen und Verfahren zum Bohren, Schneiden und Materialabtragen mittels Laser bekannt, bei denen zum Beispiel bei der Fertigung von Einspritzdüsen in der Automobilindustrie oder Spinndüsen in der Textilindustrie definierte Formen abgetragen werden können. Mit einem gebündelten Laserstrahl von hoher Leistungsdichte wird der Werkstoff geschmolzen und verdampft. Durch den dabei entstehenden Druck wird das geschmolzene Material aus der Bohrung geschleudert. Es werden beispielsweise Bohrdurchmesser von bis zu 50 µm bei einer Wandstärke von grösser als 1 mm erreicht.

Damit es nicht zu Wärmeleitung in Werkstoff kommt, gibt die Laserquelle kurze Laserpulse ab.

Der Laserstrahl kann von einer optischen Führungseinrichtung entlang des Werkstücks geführt werden, sodass eine Folge von Laserpulsen aneinander gereiht werden, wodurch theoretisch beliebig grosse Bohrungen erzeugt werden können. Bei der Führungseinrichtung kann es sich um eine rotierende Einheit handeln.

Aus der DE 10 2005 047 328 B3 ist eine Vorrichtung mit einer rotierenden Führungseinrichtung, die einen sogenannten Bildrotator umfasst, bekannt. Nach dem Durchgang durch den Bildrotator rotiert die Laserstrahlung sowohl um die Drehachse des Bildrotators als auch sich selbst. Der Bildrotator kann durch ein um eine Achse drehendes Prisma gebildet sein. Um die fertigungsbedingten Geometriefehler von Bildrotatoren auszugleichen, wird zwischen Bildrotator und Fokussiereinrichtung eine Ausgleichsvorrichtung angeordnet, die mit der gleicher Drehfrequenz wie der Bildrotator dreht und die eine Parallelversatzeinheit und eine Winkeländerungseinheit aufweist. Die Vorrichtung hat einen sehr komplexen Aufbau, der aufwendige Grundeinstellungen erfordert.

Aus der DE 101 05 346 A1 ist eine Vorrichtung zum Wendelschneiden bekannt, bei der die Führungseinrichtung für einen Laserstrahl wiederholt so entlang einer geschlossenen Kontur eines Werkstücks geführt wird, dass das Werkstück in einer wendelförmigen Schnittlinie durchtrennt wird. Die Führungseinrichtung umfasst drei Keilplatten und ausserdem λ/4 -Plättchen, die sicherstellen, dass die Polarisationsebene des Laserstrahls mitgedreht wird, so dass sich stets unter demselben Winkel zur gerade bearbeiteten Schnittfläche steht. Der Laserstrahl dreht sich mit derselben Frequenz wie die rotierende Optik. Bei einer gewünschten Rotationsfrequenz von einigen kHz bedeutet dies eine grosse Belastung für die Optik in der rotierenden Einheit.

Die DE 10 2006 053 268 A1 zeigt eine Vorrichtung zur Erzeugung eines Laserstrahlfeldes mit rotierendem Intensitätsprofil mit einer rotierenden optischen Einheit, in welcher der Laserstrahl zweimal fokussierende Zylinderoptiken durchläuft, die so angeordnet sind, dass der Strahlfeldquerschnitt eine Spiegelung an einer mit der optischen Einheit mitdrehenden geometrischen Ebene erfährt. Das Intensitätsprofil rotiert mit einer doppelt so grossen Frequenz wie die optische Einheit. Die Anordnung kommt mit wenigen Elementen in der rotierenden Einheit aus und besitzt daher einen vergleichsweise einfachen Aufbau. Es müssen allerdings immer noch mindestens zwei optische Elemente zueinander justiert werden, wobei die Einstellung auch bei hohen Drehzahlen bestehen bleiben muss.

US 5 170 278 A offenbart eine Vorrichtung, die geeignet ist zum Erzeugen eines um eine Rotationsachse rotierenden Laserstrahlprofils. Die Vorrichtung umfasst eine um eine Drehachse rotierbare Rotationseinheit, wobei die Rotationseinheit Paare von zwei senkrecht zueinander stehenden Reflektionsflächen umfasst. Die Vorrichtung wird im Zusammenhang mit einem optischen Scanner eingesetzt.

Andrew Lynchet al beschreiben in "Strahlablenkung: Prismen und Spiegel im Vergleich", Photonik, Nr. 3, 31.12.2009, Seiten 5054, die Optimierung eines Prismas durch ein metallische oder einer dielektrische Beschichtung.

US 4 143 407 A zeigt einen optischen Kombinator zum Kombinieren mehrerer synchronisierter, gepulster Lichtstrahlen. Zwei planare Spiegel sind miteinander verbunden, sodass sie eine V-förmige Anordnung bilden, die um eine Achse senkrecht zur Schnittlinie dieser Kanten drehbar ist. Eine Vielzahl von gepulsten Laserstrahlen fällt auf diese Spiegelbaugruppe, während sie sich dreht.

Es besteht die Aufgabe der Erfindung, Vorrichtungen und Verfahren vorzustellen, welche die Nachteile des Bekannten überwinden und mit welchen insbesondere ein einfacher Aufbau und eine unempfindliche Justage ermöglicht werden.

Die Aufgabe wird gelöst durch eine Vorrichtung zum Bohren und/oder für Materialabtragung mittels Laserstrahlung, die in dem Anspruch 1 definiert ist.

Die Rotationseinheit ist also sehr einfach aufgebaut und umfasst wenige zu rotierende Bauteile, die unter Vermeidung einer Unwucht montiert werden müssen. Dies führt zu einem mechanisch stabilen System, was insbesondere für hohe Drehzahlen von Vorteil ist.

Ein Laserstrahl kann in die Rotationseinheit eintreten, wird an der ersten Reflexionsfläche reflektiert, trifft auf die zweite Reflexionsfläche und wird von dort wieder in die Richtung zurückgeworfen, aus welcher der einfallende Laserstrahl kam. Der Strahl verlässt die Rotationseinheit also an der Eintrittsseite.

Um einen symmetrischen Strahlverlauf zu ermöglichen, sind entsprechend der Erfindung die Rotationsflächen derart in der Rotationseinheit angeordnet, dass die Linie, in der sich die Flächen, auf denen die Reflexionsflächen liegen, schneiden, durch die Drehachse und senkrecht zu der Drehachse der Rotationseinheit verläuft. Bevorzugt sind die Reflexionsflächen symmetrisch bezüglich der Drehachse angeordnet und die Flächennormalen der Reflexionsflächen schliessen insbesondere mit der Drehachse einen 45° Winkel ein.

Zusätzlich sind die Rotationsflächen bevorzugt so angeordnet, dass die Drehachse die Linie, in der sich die Flächen, auf denen die Reflexionsflächen liegen, halbiert.

Das Umlenken des Strahls in der Rotationseinheit kann als optische Rotation um 180° um eine Rotationsachse senkrecht zur Drehachse betrachtet werden.

Bevorzugt ist die Vorrichtung so gegenüber einer Laserquelle und/oder einer vorgeschaltete Optik ausrichtbar, dass die optische Achse des in die Rotationseinheit einfallenden Laserstrahls, auf der das Intensitätsmaximum des Strahlprofils liegt, parallel zu der Drehachse der Rotationseinheit verläuft. Bevorzugt ist die Vorrichtung so ausrichtbar, dass das Intensitätsmaximum des Strahlprofils einen Versatz gegenüber der Drehachse besitzt. Dieser ist bevorzugt grösser als der Strahlradius des Laserstrahls, also der Abstand vom Intensitätsmaximum, bei dem die Amplitude des elektrischen Feldes auf 1/e oder die Intensität auf ein 1/e² gefallen ist. Das Strahlprofil rotiert dann derart, dass das Intensitätsmaximum um die Drehachse rotiert. Die Vorrichtung kann so ausgelegt sein, dass der Versatz verstellbar ist. Je grösser der Versatz ist, desto stärker wird der drehende Strahl von einer Ausgangsoptik geneigt.

Bevorzugt ist zusätzlich vorgesehen, dass der Eingangsstrahl durch eine Eingangsoptik geführt wird, wodurch er konvergiert oder divergiert wird. Der drehende Strahl hat dann seinen geringsten Durchmesser nicht in der Fokalebene der Ausgangsoptik, sondern davor oder dahinter. Der Bereich des geringsten Strahldurchmessers führt dann eine rotierende Bewegung um die optische Achse der Ausgangsoptik aus. Die Ebene dieser Rotation wird bevorzugt mit der Oberfläche des zu bearbeitenden Werkstücks in Deckung gebracht, um eine präzise Bohrung durchzuführen und eine hohe Energieausbeute zu erlangen.

Das ausfallende Licht hat ein rotierendes Strahlprofil, das mit einer doppelt so grossen Frequenz rotiert wie die Rotationseinheit. Bei einer gewünschten Drehzahl des Strahlprofils braucht die Rotationseinheit also nur mit der halben Drehzahl gedreht werden.

Bevorzugt umfasst die Vorrichtung eine Antriebseinheit zum Drehen der Rotationseinheit.

Die Rotationseinheit umfasst beispielweise eine luftgelagerte Spindel, die von einem Elektromotor angetrieben wird. Denkbar ist auch ein Turbinenantrieb, wie er beispielweise für Bohrer in der Zahnmedizin verwendet wird.

Entsprechend der Erfindung sind die Reflexionsflächen die Dachflächen eines Porroprismas. Bei dem Porroprisma handelt es ich um ein Prisma mit Seitenflächen in Form eines rechtwinkligen Dreiecks, wobei der Lichtstrahl durch die Hypothenusenseite eintreten und an den rechtwinklig aufeinander stehenden Prismaflächen, welche eine Dachkante bilden, reflektiert werden kann. Das Porroprisma ist ein vorgefertigtes Bauteil, bei welchem die Dachflächen des Prismas einen rechten Winkel einschliessen. Die Linie, in der sich die Flächen, auf denen die Reflexionsflächen liegen, schneiden, wird durch die Dachkante des Porroprismas gebildet. Zur Montage der Rotationseinheit muss nur ein Bauteil, nämlich das Porroprisma, in einer Fassung ausgerichtet und befestigt werden, sodass die Dachkante die Rotationsachse schneidet. Der Aufbau und die Justierung der Rotationseinheit sind also sehr einfach und nach der Befestigung sehr unempfindlich.

Das Porroprisma kann beispielsweise aus Quarzglas bestehen.

Bei mechanischen Spannungen ändern sich die Brechzahlen optischer Gläser, wobei sich im Allgemeinen die Brechzahlen für parallel und senkrecht zur Spannung polarisiertes Licht unterschiedlich verhalten. Dies wird durch die spannungsoptischen Koeffizienten, bzw. die spannungsoptische Konstante des jeweiligen Glases beschrieben.

In Quarzglas können bei hohen Beschleunigungen Spannungen entstehen, die dazu führen können, dass die dielektrischen Eigenschaften nicht mehr homogen sind und die Polarisation des reflektierten Strahls entlang der Reflexionsflächen unterschiedlich geändert werden kann.

Der freie Durchmesser der Rotationseinheit kann auf die gewünschte Drehzahl abgestimmt werden, sodass der Effekt vernachlässigbar ist. Der freie Durchmesser definiert gemäss DIN ISO 10110-1:2007-08 den optisch wirksamen Bereich der Oberfläche. Es hat sich gezeigt, dass bei Drehzahlen von etwa 100.000 Umdrehungen pro Minute (rpm) ein freier Durchmesser von 10 mm möglich ist, ohne dass bei einem Porroprisma aus Quarzglas Qualitätseinbussen auftreten.

Alternativ kann ein Porroprisma aus bleihaltigem Glas verwendet werden, die deutlich kleinere spannungsoptische Koeffizienten als Quarzglas aufweisen. Es können zum Beispiel die Gläser SF57, SF57HTultra der Firma Schott, PBH56 der Firma Ohara, ZF52 von CDGM, SFn3 oder SFn3W von Sumita oder SF03 von Hikari verwendet werden.

Das SF57 hat beispielsweise eine spannungsoptische Konstante K von 0.02 10⁻⁶ mm²/N. Der Wert beträgt nur 0.6% der spannungsoptischen Konstante von Quarzglas.

Allerdings besitzt bleihaltiges Glas eine wesentlich höhere Dichte als Quarzglas, sodass auch hier der freie Durchmesser der Rotationseinheit an die gewünschte Drehzahl angepasst werden sollte, um Beeinträchtigen durch mechanische Deformationen zu beschränken.

Die Dachflächen des Porroprismas können eine metallische Beschichtung, zum Beispiel aus Gold oder Silber, aufweisen. Die Schicht kann etwa 120 nm dick sein. Die Schicht bewirkt eine Phasenverschiebung an den Reflexionsflächen, so dass eine gewünschte Polarisationseigenschaft erzielt werden kann. Alternativ oder zusätzlich können die Dachflächen des Porroprismas eine dielektrische Beschichtung, zum Beispiel Si0₂, Ta₂O₅ oder TiO₂ aufweisen. Die Schicht kann ebenfalls einige zehntel Wellenlängen, zum Beispiel etwa 120 nm, dick sein.

Die Beschichtung kann wie ein λ/4-Plättchen wirken und die Polarisation bei der Reflexion ändern.

Die dielektrische Beschichtung kann bewirken, dass die beiden Reflexionsflächen zusammen wie eine λ/2-Platte wirken, die an der Eintrittsfläche des Porroprismas angeordnet ist. Der eingehende und der ausgehende Strahl können also eine unterschiedliche Polarisierung aufweisen und von einem Strahlteiler getrennt werden können.

Zusätzlich kann die Eintrittsfläche des Porroprismas entspiegelt sein.

Entsprechend der Erfindung umfasst die Rotationseinheit eine Einheit zum Verändern der Polarisation, insbesondere ein λ/4-Plättchen.

Der zu reflektierende Laserstrahl wird dadurch zum Beispiel aus linear zu zirkular oder aus zirkular zu linear polarisiertem Licht.

Das λ/4-Plättchen ist insbesondere um 45° gegenüber die Linie, in der sich die Flächen, auf denen die Reflexionsflächen liegen, schneiden, gedreht.

Die mit der Rotationseinheit drehende Einheit zum Verändern der Polarisation wirkt zusammen mit den Polarisationseffekten der Reflexionsflächen.

Da das ausfallende Licht von der Rotationseinheit wieder zurück in die Richtung des einfallenden Lichts geworfen wird, müssen das einfallende und das ausfallende Licht voneinander getrennt werden.

Bevorzugt umfasst die Vorrichtung einen Strahlteiler, welcher der Rotationseinheit vorgeordnet ist, der im Strahlgang des bezüglich der Reflexionsflächen einfallenden Strahls und im Strahlgang des bezüglich der Reflexionsflächen ausfallenden Strahls angeordnet ist.

Der Strahlteiler kann durchlässig oder reflektierend wirken, je nachdem welche Polarisation, bzw. welche Polarisationsrichtung, das auftretende Licht hat.

Ist der Strahlteiler durchlässig für den aus der Rotationseinheit austretenden Strahl, so fallen die Drehachse der Rotationseinheit und die Rotationsachse des rotierenden Strahlprofils zusammen.

Wirkt der Strahlteiler reflektierend auf den aus der Rotationseinheit austretenden Strahl, so wird auch die Rotationsachse gegenüber der Drehachse umgelenkt.

Die Vorrichtung kann ausserdem eine Einheit zum Verändern der Polarisation, insbesondere ein Lambda-Viertel (λ/4)-Plättchen umfassen, die zwischen Strahlteiler und Rotationseinheit angeordnet ist.

Diese Einheit zum Verändern der Polarisation ist wie der Strahlteiler statisch angeordnet und wird nicht mit der Rotationseinheit mitgedreht, es wirken daher auch keine dynamischen Belastungen auf die Bauteile.

In einer vorteilhaften Ausführung der Erfindung weist die Vorrichtung eine Fokussier- und/oder Aufweitoptik auf, die von dem bezüglich der Reflexionsflächen ausfallenden Strahl passierbar ist. Bevorzugt wird die Fokussier- und/oder Aufweitoptik von einem den Strahlteiler verlassenden Strahl durchlaufen, insbesondere nachdem der ausfallende Strahl einen Strahlteiler passiert hat.

Die Fokussier- und/oder Aufweitoptik kann mit einer Optik zusammenwirken, die bereits am Arbeitsort vorhanden ist.

Insgesamt ergibt sich bevorzugt eine Fokussieroptik, welche das Intensitätsprofil auf einen bestimmten Bereich fokussiert und/oder dem Strahl eine gewünschte Richtung gibt.

Die Vorrichtung kann zudem eine Fokussieroptik aufweisen, die beispielsweise dem Strahlteiler vorgeordnet ist und die bewirkt, dass der in die Rotationseinheit einlaufende Strahl vorfokussiert ist, so dass der Strahl in seinem Verlauf leicht divergiert oder konvergiert. Durch eine entsprechende Divergenz kann beispielweise gegenüber der Fokalebene der Ausgangsoptik eine Fokusverschiebung von einigen Millimetern eingestellt werden. Bei einer Neigung des sich drehenden Strahls von etwa 5° gegenüber der optischen Achse der Ausgangsoptik können somit Bohrradien von bis zu einigen Zehntel Millimetern erreicht werden. Die Vorrichtung kann auch mehr als eine Rotationseinheit aufweisen, die in Reihe nacheinander durchlaufen werden. Bei einem weiteren Durchlauf durch ein Rotationssystem mit derselben Rotationsfrequenz kann sich die Drehfrequenz des Strahlprofils ein weiteres Mal verdoppeln.

Bei n nacheinander geschalteten drehenden Rotationseinheiten kann je nach Phasenunterschied eine Drehfrequenz des Laserstrahls zwischen 0 und der Summe der jeweils verdoppelten Rotationsfrequenzen der jeweiligen Rotationseinheiten eingestellt werden.

Die Vorrichtung kann eine Kaskaden-Anordnung von mindestens zwei Rotationseinheiten umfassen, bei welcher ein aus einer Rotationseinheit austretender Strahl in eine in Strahlausbreitungsrichtung nachfolgende Rotationseinheit geführt wird.

Die Aufgabe wird ausserdem gelöst durch eine Vorrichtung zum Bohren und/oder für Materialabtragung mittels Laserstrahlung umfassend eine Laserstrahlquelle und eine Vorrichtung wie oben beschrieben.

Bei der Laserquelle handelt es sich bevorzugt um eine Laserquelle, die kurze Laserpulse abgibt, zum Beispiel ein Femtosekundenlaser. Es kann ein Festkörperlaser verwendet werden, zum Beispiel ein YAG-Laser.

Die Aufgabe wird ausserdem gelöst durch die Verwendung dieser erfindungsgemässen Vorrichtung zum Bohren und/oder zur Materialabtragung mittels Laserstrahlung, siehe Anspruch 9. gespiegelt. Der aus der Rotationseinheit ausfallende Strahl verlässt die Rotationseinheit in entgegengesetzter Richtung zu dem in die Rotationseinheit einfallenden Strahl.

Bevorzugt wird die Rotationseinheit mit einer Drehzahl von 500 - 100.000 rpm gedreht.

Ist die Strahlachse des einfallenden Strahls, auf der das Intensitätsmaximum des Strahlprofils liegt, gegenüber der Drehachse versetzt, sodass die Strahlachse in einem Abstand parallel zu der Drehachse verläuft, so dreht sich das Maximum des Strahlprofil des ausfallenden Strahls um die Drehachse.

Bei idealer Ausrichtung der Reflexionsflächen, wenn die Linie, in der sich die Flächen, auf denen die Reflexionsflächen liegen, schneiden, senkrecht zur Drehachse steht und durch die Drehachse hindurchläuft, und wenn die Reflexionsflächen symmetrisch zur der Drehachse angeordnet sind, führt das Strahlprofilmaximum in einer Ebene senkrecht zur Drehachse eine Kreisbewegung aus.

In einer vorteilhaften Ausführung des Verfahrens wird die Polarisation des einfallenden Strahls und des ausfallenden Strahls durch eine in der Rotationseinheit angeordnete Einheit zum Verändern der Polarisation, insbesondere ein Lambda-Viertel (λ\4)-Plättchen geändert. Die Einheit zum Verändern der Polarisation wird also mit der Rotationseinheit mitgedreht. Der Strahl durchläuft die Einheit, bevor er an den Reflexionsflächen reflektiert wird und nachdem er an den Reflexionsflächen reflektiert wurde. Bevorzugt ist ein λ/4-Plättchen um 45° gegenüber der Linie, in der sich die Flächen, auf denen die Reflexionsflächen liegen, schneiden, um die Drehachse gedreht. In diesem Fall ist keine Beschichtung der Reflexionsflächen zum Ändern der Polarisation notwendig.

Zusätzlich oder alternativ kann die Polarisation des einfallenden Strahls und des ausfallenden Strahls durch eine ausserhalb der Rotationseinheit angeordnete Einheit zum Verändern der Polarisation, insbesondere ein Lambda-Viertel (λ/4)-Plättchen geändert werden. Der Strahl durchläuft die Einheit, bevor er in die Rotationseinheit eintritt und nachdem er aus der Rotationseinheit austritt.

In einer vorzugsweisen Ausführung des Verfahrens treffen der einfallende Strahl und der ausfallende Strahl auf einen Strahlteiler, der den ausfallenden Strahl von dem einfallenden Strahl weglenkt.

Der von der Laserquelle kommende einfallende Strahl weist eine Polarisation auf, so dass er zum Beispiel den Strahlteiler durchläuft. Der aus der Rotationseinheit kommende und gegebenenfalls durch eine Einheit zum Verändern der Polarisation getretene ausfallende Strahl, besitzt eine andere Polarisation, so dass er an dem Strahlteiler reflektiert wird.

Alternativ kann der einfallende Strahl an dem Strahlteiler reflektiert werden und der ausfallende Strahl durch den Strahlteiler hindurchtreten.

Der ausfallende Strahl kann anschliessend durch eine Optik geführt werden, insbesondere eine Fokussieroptik, mit welcher der Strahl in eine bestimmte Richtung gelenkt wird und auf bezüglich eines bestimmten Abstands fokussiert wird.

Der ausfallende Strahl kann in eine weitere Rotationseinheit geführt werden.

Der einfallende Strahl kann vor Eintritt in die Rotationseinheit durch eine Optik, insbesondere eine Fokussieroptik, geführt werden, so dass er bereits als fokussierter Strahl mit konvergentem oder divergentem Strahlverlauf in die Rotationseinheit eintritt.

Der einfallende Strahl wird von einer, insbesondere gepulsten, Laserquelle erzeugt und/oder der ausfallende Strahl ist auf ein Werkstück gerichtet.

Die Aufgabe wird ausserdem gelöst durch ein Verfahren zur Montage eines Porroprismas in einer Rotationseinheit entsprechend Anspruch 13, umfassend die folgenden Schritte.

Zunächst wird das Porroprisma in einer Fassung fixiert, es kann zum Beispiel eingeklebt werden.

Die optische Achse wird mit einem Kollimator bezüglich einer zuvor festgelegten Drehachse ausgerichtet. Dabei wird erreicht, dass die Dachflächen des Porroprismas mit der Drehachse den gleichen Winkel einschliessen, damit es nicht zu einer Unwucht kommt.

Anschliessend erfolgt entsprechend der Erfindung ein Abdrehen der Fassung, so dass die mechanische Symmetrieachse der Fassung und die Dachkante senkrecht aufeinander stehen.

Das gefasste Porroprisma kann dann in eine Spindel eingebaut werden. Die Spindel umfasst bevorzugt einen Spindelantrieb, der dafür sorgt, dass die Fassung mit den Reflexionsflächen um die optische Achse und damit die zuvor festgelegte Drehachse rotiert.

Das Verfahren ist vergleichbar mit dem Zentrierdrehen, beispielsweise mittels Kugelfutterzentrierung, für hochgenau gefasste Linsen.

Zur Ausrichtung des Prismas werden insbesondere die folgenden Schritte ausgeführt.

Ein Autokollimationsfernrohr wird parallel zur Drehachse ausgerichtet. Dazu kann zunächst ein Planspiegel senkrecht zu der Drehachse ausgerichtet werden, wonach durch Kippen des Autokollimationsfernrohrs dessen Fadenkreuze aufeinander gerichtet werden.

Dann wird das Porroprisma ausgerichtet, sodass die Dachkante des Porroprismas senkrecht zur Drehachse verläuft. Das Autokollimationsfernrohr kann dazu ohne Vorsatzlinse benutzt werden.

Das Porroprisma wird dann so ausgerichtet, dass die Dachkante auf der Drehachse liegt. Das Autokollimationsfernrohr kann dazu mit Vorsatzlinse benutzt werden. Die Dachkante kann im Bild des Autokollimationsfernrohrs sichtbar sein und es erfolgt eine Verschiebung, bis das Fadenkreuz lateral stehen bleibt oder bis die Dachkante auf der Drehachse liegt.

Danach kann das Porroprisma entlang der Richtung der Dachkante verschoben werden, bis die Mitte der Fassung auf der Drehachse liegt.

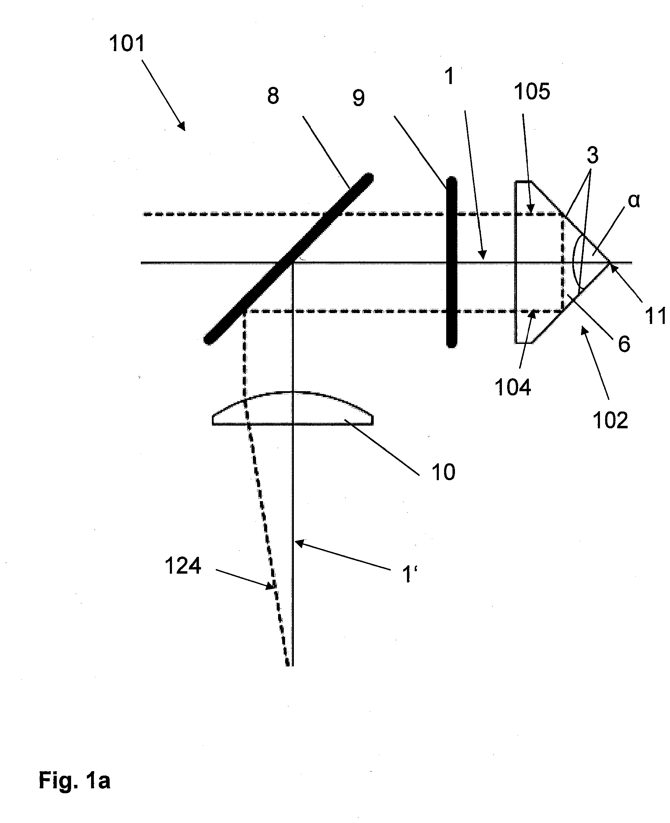

Im Folgenden wird die Erfindung in Ausführungsbeispielen näher erläutert. Hierbei zeigen
- Fig. 1a: eine schematische Ansicht eines ersten Beispiels für eine erfindungsgemässe Vorrichtung in Draufsicht mit einer ersten Stellung der Rotationseinheit;
- Fig. 1a: eine schematische Ansicht des ersten Beispiels in Draufsicht mit einer zweiten Stellung der Rotationseinheit;
- Fig. 2: eine schematische Ansicht eines zweiten Beispiels für eine erfindungsgemässe Vorrichtung in Draufsicht;
- Fig. 3: ein montiertes Porroprisma in Schnittansicht;
- Fig. 4: eine schematische Ansicht eines Beispiels für eine erfindungsgemässe Vorrichtung zum Bohren und/oder für Materialabtragung;
- Fig. 5a: eine schematische Ansicht eines dritten Beispiels für eine erfindungsgemässe Vorrichtung in Draufsicht mit einer ersten Stellung der Rotationseinheiten;
- Fig. 5b: eine schematische Ansicht des dritten Beispiels in Draufsicht mit einer zweiten Stellung der Rotationseinheiten.

Figur 1a und lbzeigen ein erstes Beispiel für eine erfindungsgemässe Vorrichtung 101 in Draufsicht.

Mit der Vorrichtung 101 wird ein um eine Rotationsachse 1' rotierenden Laserstrahlprofils eines austretenden Strahls 104 erzeugt.

Die Vorrichtung 101 weist eine um eine Drehachse 1 rotierbare Rotationseinheit 102 auf, die zwei senkrecht zueinander stehende, also eine einen Winkel α von 90° einschliessende, Reflexionsflächen 3 umfasst. Diese sind so angeordnet, dass der bezüglich der Reflexionsflächen 3 ausfallende Strahl 104 in entgegengesetzter Richtung zu dem bezüglich der Reflexionsflächen 3 einfallenden Strahl 105 verläuft.

Die Reflexionsflächen 3 werden von einem Porroprisma 6 gebildet. Die Linie 11, in der sich die Flächen, auf denen die Reflexionsflächen 3 liegen, schneiden, verläuft durch die Drehachse 1 und senkrecht zu der Drehachse 1. Die Drehachse 1 halbiert den Winkel a, sodass die Reflexionsflächen 3 symmetrisch zur Drehachse 1 angeordnet sind.

Die Vorrichtung 101 umfasst einen Strahlteiler 8, welcher der Rotationseinheit 102 vorgeordnet ist, der im Strahlgang des bezüglich der Reflexionsflächen 3 einfallenden Strahls 105 und des bezüglich der Reflexionsflächen 3 ausfallenden Strahls 104 angeordnet ist. Der Strahlteiler 8 leitet den einfallenden Strahl 105 durch. Zwischen dem Strahlteiler 8 und Rotationseinheit 102 ist eine Einheit zum Verändern der Polarisation 9, hier ein λ/4-Plättchen, angeordnet, sodass der ausfallende Strahl 104 von dem Strahlteiler 8 reflektiert wird. Die Rotationsachse 1' wird dabei aus der Richtung der Drehachse 1 abgelenkt.

Der Strahl 104 läuft anschliessend durch eine Fokussieroptik 10.

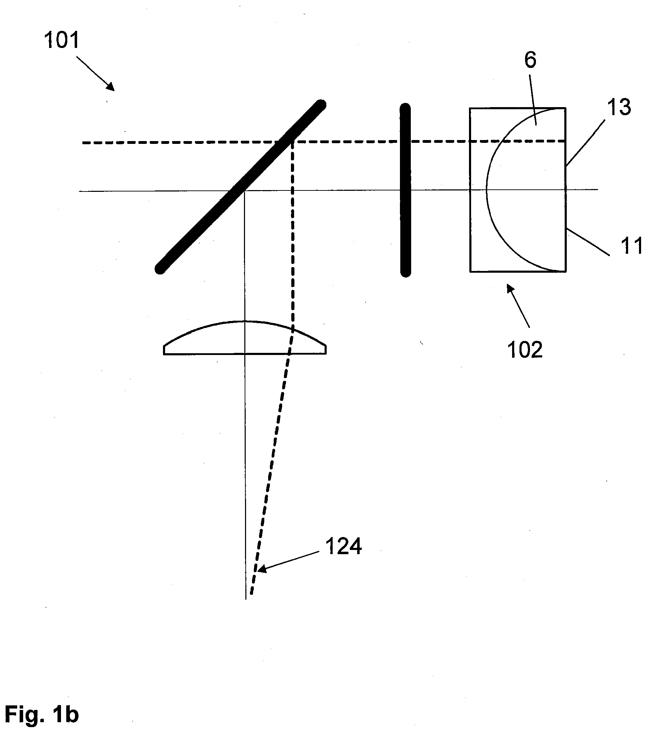

Figur 1b zeigt die erfindungsgemässe Vorrichtung 101 in Draufsicht, wobei die Rotationseinheit 102 gegenüber der Stellung in Figur 1a um 90° gedreht ist. Die Linie 11, in der sich die Flächen, auf denen die Reflexionsflächen 3 liegen, schneiden, und damit die Dachkante 13 des Porroprismas 6, liegt in der Bildebene.

Während die Rotationseinheit 102 sich erst um 90° gedreht hat, hat der auslaufende Strahl 124 gegenüber der Stellung in Figur 1a bereits eine Drehung von 180° durchgeführt.

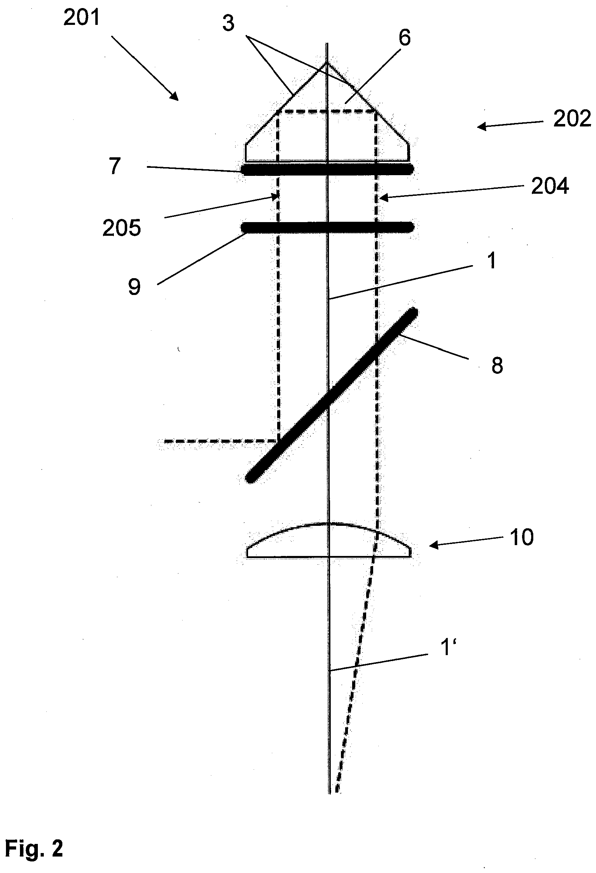

Figur 2 zeigt ein zweites Beispiel für eine erfindungsgemässe Vorrichtung 201 in Draufsicht.

Die Vorrichtung 201 weist ebenfalls eine um eine Drehachse 1 rotierbare Rotationseinheit 202 auf, die zwei senkrecht zueinander stehende Reflexionsflächen 3 umfasst. Diese sind so angeordnet, dass der bezüglich der Reflexionsflächen 3 ausfallende Strahl 204 in entgegengesetzter Richtung zu dem bezüglich der Reflexionsflächen 3 einfallenden Strahl 205 verläuft.

Die Vorrichtung 201 umfasst einen Strahlteiler 8, welcher der Rotationseinheit 202 vorgeordnet ist und der im Strahlgang des bezüglich der Reflexionsflächen 3 einfallenden Strahls 205 und des bezüglich der Reflexionsflächen 3 ausfallenden Strahls 204 angeordnet ist.

Der Strahlteiler 8 reflektiert den einfallenden Strahl 205 und lässt den ausfallendes Strahl 204 durch, so dass die Rotationsachse 1', um die das Strahlprofil dreht, mit der Drehachse 1 der Rotationseinheit zusammenfällt.

Zwischen Strahlteiler 8 und Rotationseinheit 202 ist eine Einheit zum Verändern der Polarisation 9, hier ein λ/4-Plättchen, angeordnet. Entsprechend der Erfindung umfasst die Rotationseinheit 202 eine weitere Einheit zum Verändern der Polarisation 7, zum Beispiel ein λ/4-Plättchen, die mitgedreht wird.

Alternativ können die Reflexionsflächen 3 mit einer in der Figur nicht explizit dargestellten dielektrischen Schicht versehen sein. In diesem Fall wird beispielweise ein linear polarisierter einfallender Strahl 205 erzeugt, der vom Strahlteiler 8 reflektiert wird und der nach Durchtritt des λ/4-Plättchens 9 zirkular polarisiert ist. Nach zweimaliger Reflexion im Porroprisma 6 mit dielektrischer Beschichtung ist der Strahl wieder zirkular polarisiert. Aber nachdem der ausfallenden Strahl 204 das λ/4-Plättchen 9 passiert hat, weist der dann linear polarisierte Strahl eine andere Polarisationsrichtung auf als der einfallende Strahl 205, sodass der ausfallende Strahl 204 vom Strahlteiler durchgelassen wird.

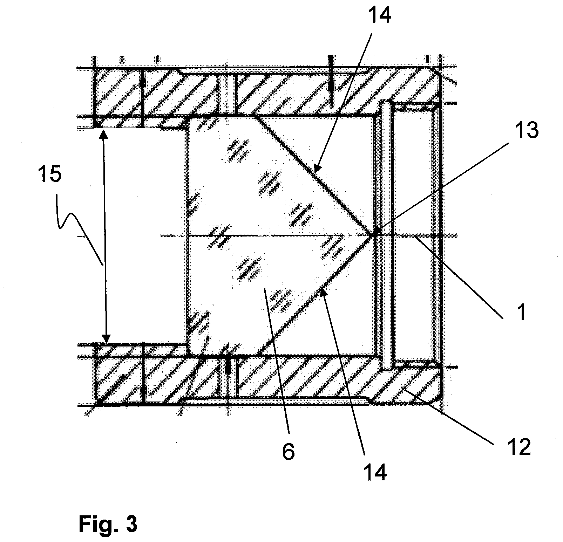

Der Strahl 204 läuft anschliessend durch eine Fokussieroptik 10. Figur 3 zeigt ein montiertes Porroprisma 6 in Schnittansicht. Das Porroprisma 6 ist so ausgerichtet, dass die Dachkante 13 des Porroprismas 6, in der sich die Dachflächen 14 des Porroprismas 6 treffen, senkrecht zur Drehachse 1 verläuft und die Dachkante 13 auf der Drehachse 1 liegt.

Das Porroprisma 6 ist so montiert, dass die mechanische Symmetrieachse der Fassung 12 mit der Drehachse 1 zusammenfällt. Die Fassung 12 kann dazu bei der Montage geeignet abgedreht werden.

Der freie Durchmesser 15 der Fassung 12 kann beispielsweise 10mm betragen. Der Abstand des Intensitätsmaximums eines Laserstrahls mit einem Strahlradius von 0,9mm von der Drehachse kann zum Beispiel 3mm betragen.

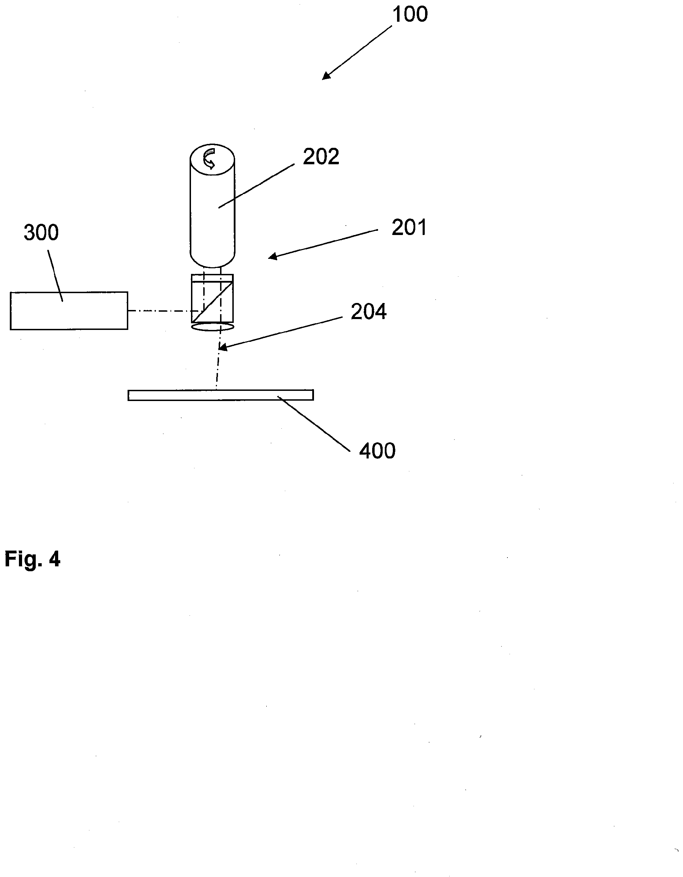

Figur 4 zeigt eine schematische Ansicht eines Beispiels für eine erfindungsgemässe Vorrichtung 100 zum Bohren und/oder für Materialabtragung.

Die Vorrichtung 100 umfasst eine Vorrichtung 201 zur Erzeugung eines rotierenden Laserstrahlprofils, die einen Rotationseinheit 202 umfasst, und eine Laserstrahlquelle 300, der einen, insbesondere gepulsten, Laserstrahl 205 erzeugt.

Der ausfallende Strahl 204, der ein rotierendes Strahlprofil aufweist, ist auf ein Werkstück 400 gerichtet. Im Brennpunkt der Fokussieroptik beträgt der Strahlradius 0.01mm.

Bei der Laserstrahlquelle kann es sich um einen Laser mit einer mittleren Leistung von 50 - 200 W, mit einer Pulsenergie von 0.1 -1 mJ und einer Pulsdauer von 300 fs bis 10 ps handeln, die Pulsenergiedichte beträgt 2.3 mJ/cm² und die Pulsleistungsdichte 230 MW/cm², wobei die Leistungs- und Energiedichten für einen Strahlradius von 1.84 mm angegeben sind. Die Wellenlänge beträgt 1030-1080 nm.

Es können aber auch Laser mit einer höheren Laserleistung verwendet werden, zum Beispiel mit einer mittleren Leistung von 200 W, mit einer Pulsenergie von 1-3 mJ und einer Pulsdauer von kleiner 1 ps. Die Pulsenergiedichte beträgt dann 56 mJ/cm² und die Pulsleistungsdichte 56 GW/cm².

Die Brennweiten der Fokussieroptik können zwischen 40 und 200 mm liegen und es können beispielweise Bohrdurchmesser zwischen 30 und 200 µm erreicht werden.

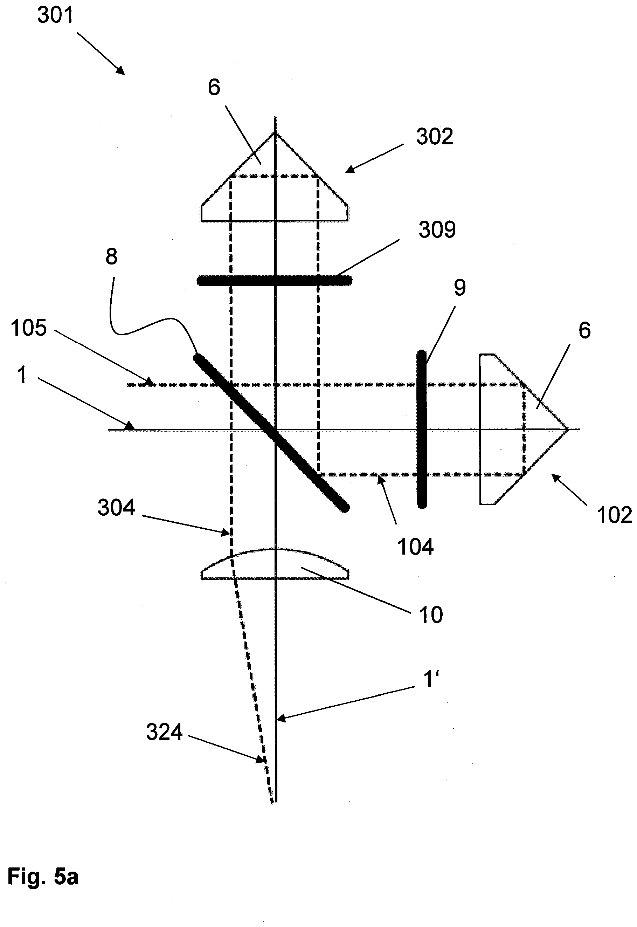

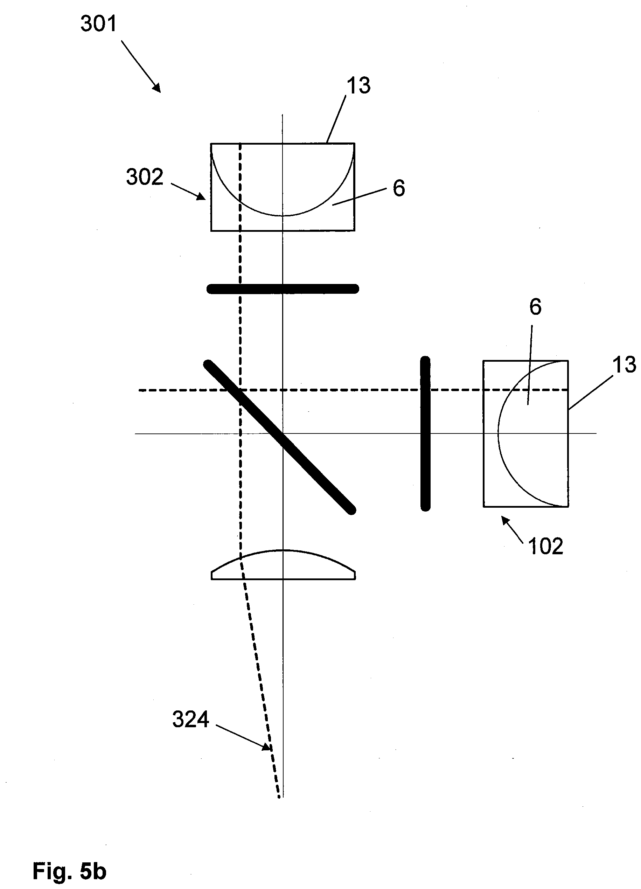

Figuren 5a und 5b zeigen ein drittes Beispiel für eine erfindungsgemässe Vorrichtung 301 in Draufsicht.

Mit der Vorrichtung 301 wird ein um eine Rotationsachse 1' rotierenden Laserstrahlprofils eines austretenden Strahls 104 erzeugt.

Die Vorrichtung 301 weist zwei im Strahlverlauf hintereinander angeordnete rotierbare Rotationseinheiten 102, 302 auf, die je ein Porroprisma 6 aufweisen.

Analog zu dem Beispiel aus Figur 1 umfasst die Vorrichtung 301 einen Strahlteiler 8, der im Strahlgang des einfallenden Strahls 105 angeordnet ist und den einfallenden Strahl 105 durchleitet. Der Strahl trifft auf eine Einheit zum Verändern der Polarisation 9, hier ein λ/4-Plättchen. Er wird dann von einer Rotationseinheit 102 zurückgeworfen, wobei das Strahlprofil mit einer ersten Frequenz rotiert, die doppelt so gross ist wie die Drehfrequenz der Rotationseinheit 102. Der Strahl durchläuft wieder das λ/4-Plättchen 9, so dass der ausfallende Strahl 104, wie auch in dem in Figur 1 gezeigten Beispiel von dem Strahlteiler 8 reflektiert wird. Danach läuft der Strahl allerdings nochmals durch eine weitere Einheit zum Verändern der Polarisation 309, hier ein λ/4-Plättchen,und eine weitere Rotationseinheit 302.

Der aus der Rotationseinheit 302 ausfallende Strahl 304 wird von dem Strahlteiler 8 durchgelassen, nachdem er das λ/4-Plättchen 309 durchlaufen hat. Dreht die zweite Rotationseinheit 309 mit derselben Frequenz wie die erste Rotationseinheit 102, so rotiert das Strahlprofile des auslaufenden Strahls 304 mit einer Frequenz um die Rotationsachse 1', die viermal so gross ist, wie die einzelne Drehfrequenz der Rotationseinheiten 102, 302.

Der Strahl 304 läuft anschliessend durch eine Fokussieroptik 10.

Figur 5b zeigt dasselbe Beispiel wie Figur 5a, wobei die Rotationseinheiten 102 und 302 jeweils gegenüber der in Figur 5a gezeigten Stellung um je 90° gedreht sind, sodass die Dachkanten 13 der Porroprismen 6 in der Bildebene liegen.

Der rotierende Strahl 324 hat gegenüber der in Figur 5a dargestellten Lage schon wieder die Ausgangsposition erreicht, also schon eine Drehung von 360° erfahren. Die Drehung des Strahls 324 ist also viermal schneller als die Rotation der einzelnen Rotationeinheiten 102, 302.

## Patentansprüche

1. Vorrichtung zum Bohren und/oder für Materialabtragung mittels Laserstrahlung umfassend eine Laserstrahlquelle (300) und eine Vorrichtung (101; 201) zum Rotieren eines Laserstrahlprofils um eine Rotationsachse (1'), umfassend eine um eine Drehachse (1) rotierbare Rotationseinheit (102; 202),
**dadurch gekennzeichnet, dass**
die Rotationseinheit (102; 202; 302) zwei senkrecht zueinander stehende Reflexionsflächen (3) umfasst, die derart angeordnet sind, dass ein bezüglich der Reflexionsflächen (3) ausfallender Strahl (104; 204; 304) in entgegengesetzter Richtung zu einem bezüglich der Reflexionsflächen (3) einfallenden Strahl (105; 205) verläuft, wobei die Linie (11), in der sich die Flächen, auf denen die Reflexionsflächen (3) liegen, schneiden, durch die Drehachse (1) und senkrecht zu der Drehachse (1) verläuft, wobei die Reflexionsflächen (3) die Dachflächen (14) eines Porroprismas (6) sind und wobei die Rotationseinheit (202) eine Einheit (7) zum Verändern der Polarisation, insbesondere ein Lambda-Viertel Plättchen, umfasst.

2. Vorrichtung nach Anspruch 1, wobei die Reflexionsflächen (3) die Dachflächen (14) eines Porroprismas (6) aus Quarzglas oder einem bleihaltigen Glas sind.

3. Vorrichtung nach Anspruch 2, wobei die Dachflächen (14) des Porroprismas (6) eine metallische Beschichtung aufweisen.

4. Vorrichtung nach Anspruch 2, wobei die Dachflächen (14) des Porroprismas (106; 206) eine dielektrische Beschichtung, zum Beispiel Si0₂, Ta₂O₅ oder TiO₂ aufweisen.

5. Vorrichtung nach einem der vorgehenden Ansprüche, wobei die Einheit (7) zum Verändern der Polarisation, insbesondere ein Lambda-Viertel (λ/4-) Plättchen, um 45° gegenüber der Linie, in der sich die Flächen, auf denen die Reflexionsflächen (3) liegen, schneiden, gedreht ist.

6. Vorrichtung nach einem der vorgehenden Ansprüche, wobei der Rotationseinheit (102; 202; 302) ein Strahlteiler (8) vorgeordnet ist, der im Strahlgang des bezüglich der Reflexionsflächen (3) einfallenden Strahls (105; 205) und des bezüglich der Reflexionsflächen (3) ausfallenden Strahls (104; 204; 304) angeordnet ist.

7. Vorrichtung nach Anspruch 6, wobei zwischen Strahlteiler (8) und Rotationseinheit (102; 202) eine Einheit (9, 309) zum Verändern der Polarisation, insbesondere ein Lambda-Viertel (λ/4)-Plättchen angeordnet ist.

8. Vorrichtung nach einem der vorgehenden Ansprüche, wobei die Vorrichtung eine Fokussier- und/oder Aufweitoptik (10) umfasst, die von dem bezüglich der Reflexionsflächen (3) ausfallenden Strahl (104; 204; 304) passierbar ist.

9. Verwendung einer Vorrichtung gemäss einem der Ansprüche 1-8 zum Bohren und/oder für Materialabtragung mittels Laserstrahlung, wobei ein einfallender Strahl (105; 205) in einer um eine Drehachse (1) rotierende Rotationseinheit (102; 202) an zwei senkrecht zueinander stehenden Reflexionsflächen (3) gespiegelt wird, und der ausfallende Strahl (104; 204) die Rotationseinheit (102; 202) in entgegengesetzter Richtung zum einfallenden Strahl (105; 205) verlässt und wobei der einfallende Strahl (105; 205) von einer, insbesondere gepulsten, Laserstrahlquelle (300) erzeugt wird und/oder wobei der ausfallende Strahl (104; 204; 304) auf ein Werkstück (400) gerichtet ist.

10. Verwendung gemäss Anspruch 9, wobei die Polarisation des einfallenden Strahls (105; 205) und des ausfallenden Strahls (104; 204) durch eine in der Rotationseinheit (202) angeordnete Einheit zum Verändern der Polarisation (7), insbesondere ein Lambda-Viertel (λ/4)-Plättchen geändert wird.

11. Verwendung gemäss Anspruch 9 oder 10, wobei die Polarisation des einfallenden Strahls (105; 205) und des ausfallenden Strahls (104; 204; 304) durch eine ausserhalb der Rotationseinheit (102; 202; 302) angeordnete Einheit (9, 309) zum Verändern der Polarisation, insbesondere ein Lambda-Viertel (λ/4)-Plättchen geändert wird.

12. Verwendung gemäss einem der Ansprüche 9-11, wobei der einfallende Strahl (105; 205) und der ausfallende Strahl (104; 204) einen Strahlteiler (8) treffen, der den ausfallenden Strahl (104; 204) von dem einfallenden Strahl (105; 205) weglenkt.

13. Verfahren zur Montage eines Porroprismas (6) in einer Rotationseinheit (102; 202), **gekennzeichnet durch** die Schritte:
- Fixieren des Porroprismas (6) in einer Fassung (12) ;
- Ausrichten der optischen Achse mit einem Kollimator bezüglich einer Drehachse (1);
- Abdrehen der Fassung (12), so dass die mechanische Symmetrieachse der Fassung (12) und die optische Achse zusammenfallen;
- insbesondere Einbau in eine Spindel.

14. Verfahren gemäss Anspruch 13, wobei
- ein Autokollimationsfernrohr parallel zu einer Drehachse (1) ausgerichtet wird und
- das Porroprisma (6) ausgerichtet wird, sodass die Dachkante (13) des Porroprismas (6) senkrecht zur Drehachse (1) verläuft, die Dachkante (13) auf der Drehachse (1) liegt
- und insbesondere das Porroprisma (6) ausgerichtet wird, sodass die Mitte der Fassung (12) auf der Drehachse liegt.

## Claims

1. Device for drilling and/or for material removal by means of laser radiation comprising a laser beam source (300) and a device (101; 201) for rotating a laser beam profile about a rotation axis (1'), comprising a rotation unit (102; 202) rotatable about a rotation axis (1), **characterised in that** the rotation unit (102; 202; 302) comprises two reflection surfaces (3) which are perpendicular to one another and are arranged in such a way that a beam (104; 204; 304) which is incident with respect to the reflection surfaces (3) runs in the opposite direction to a beam (105; 205) with respect to the reflecting surfaces (3), wherein the line (11) in which the surfaces on which the reflecting surfaces (3) lie intersect passes through the axis of rotation (1) and perpendicularly to the axis of rotation (1), wherein the reflecting surfaces (3) are the roof surfaces (14) of a porroprism (6) and wherein the rotation unit (202) comprises a unit (7) for changing the polarisation, in particular a lambda quarter plate.

2. Device according to claim 1, wherein the reflecting surfaces (3) are the roof surfaces (14) of a porroprism (6) made of quartz glass or a lead-containing glass.

3. Device according to claim 2, wherein the roof surfaces (14) of the porroprism (6) comprise a metallic coating.

4. Device according to claim 2, wherein the roof surfaces (14) of the porroprism (106; 206) comprise a dielectric coating, for example Si02, Ta2O5 or TiO2.

5. Device according to any one of the preceding claims, wherein the unit (7) for varying the polarisation, in particular a lambda quarter (λ/4-) plate, is rotated by 45° with respect to the line in which the surfaces on which the reflecting surfaces (3) lie intersect.

6. Device according to one of the preceding claims, wherein the rotation unit (102; 202; 302) is preceded by a beam splitter (8) which is arranged in the beam path of the incident beam (105; 205) with respect to the reflection surfaces (3) and of the outgoing beam (104; 204; 304) with respect to the reflection surfaces (3).

7. Device according to claim 6, wherein a unit (9, 309) for changing the polarisation, in particular a lambda quarter (λ/4) plate, is arranged between the beam splitter (8) and the rotation unit (102; 202).

8. Device according to any one of the preceding claims, wherein the device comprises focusing and/or expanding optics (10) which can be passed by the beam (104; 204; 304) emitted with respect to the reflecting surfaces (3).

9. Use of a device according to one of claims 1-8 for drilling and/or for material removal by means of laser radiation, wherein an incident beam (105; 205) is reflected in a rotation unit (102; 202) rotating about an axis of rotation (1) at two reflection surfaces (3) perpendicular to one another, and the incident beam (104; 204) leaves the rotation unit (102; 202) in the opposite direction to the incident beam (105; 205) and wherein the incident beam (105; 205) is generated by a, in particular pulsed, laser beam source (300) and/or wherein the incident beam (104; 204; 304) is directed onto a workpiece (400).

10. Use according to claim 9, wherein the polarisation of the incident beam (105; 205) and of the outgoing beam (104; 204) is changed by a unit for changing the polarisation (7), in particular a lambda quarter (λ/4) plate, arranged in the rotation unit (202).

11. Use according to claim 9 or 10, wherein the polarisation of the incident beam (105; 205) and the outgoing beam (104; 204; 304) is changed by a unit (9, 309) for changing the polarisation, in particular a lambda quarter (λ/4) plate, arranged outside the rotation unit (102; 202; 302).

12. Use according to any one of claims 9-11, wherein the incident beam (105; 205) and the outgoing beam (104; 204) meet a beam splitter (8) which deflects the outgoing beam (104; 204) away from the incident beam (105; 205).

13. A method of mounting a porroprism (6) in a rotary unit (102; 202), **characterized by** the steps of:
- Fixing the porroprism (6) in a mount (12);
- Aligning the optical axis with a collimator with respect to an axis of rotation (1);
- turning the mount (12) so that the mechanical axis of symmetry of the mount (12) and the optical axis coincide;
- in particular installation in a spindle.

14. Method according to claim 13, wherein
- an autocollimating telescope is aligned parallel to an axis of rotation (1), and
- the porroprism (6) is aligned so that the roof edge (13) of the porroprism (6) is perpendicular to the axis of rotation (1), the roof edge (13) lies on the axis of rotation (1)
- and in particular the porroprism (6) is aligned so that the centre of the mount (12) lies on the axis of rotation.

## Revendications

1. Dispositif de perçage et/ou d'enlèvement de matière par rayonnement laser comprenant une source de faisceau laser (300) et un dispositif (101 ; 201) pour faire tourner un profil de faisceau laser autour d'un axe de rotation (1'), comprenant une unité de rotation (102 ; 202) pouvant tourner autour d'un axe de rotation (1), **caractérisé en ce que** l'unité de rotation (102 ; 202 ; 302) comprend deux surfaces de réflexion (3) perpendiculaires l'une à l'autre, qui sont disposées de telle sorte qu'un faisceau (104 ; 204 ; 304) incident par rapport aux surfaces de réflexion (3) est orienté dans la direction opposée à un faisceau (105 ; 205), la ligne (11) d'intersection des surfaces sur lesquelles se trouvent les surfaces de réflexion (3) passant par l'axe de rotation (1) et étant perpendiculaire à l'axe de rotation (1), les surfaces de réflexion (3) étant les surfaces de toit (14) d'un prisme de Porro (6) et l'unité de rotation (202) comprenant une unité (7) de modification de la polarisation, notamment une lame quart d'onde.

2. Dispositif selon la revendication 1, dans lequel les surfaces de réflexion (3) sont les surfaces de toit (14) d'un prisme de Porro (6) en verre de quartz ou en verre contenant du plomb.

3. Dispositif selon la revendication 2, dans lequel les surfaces de toit (14) du prisme de Porro (6) présentent un revêtement métallique.

4. Dispositif selon la revendication 2, dans lequel les surfaces de toit (14) du prisme de Porro (106 ; 206) présentent un revêtement diélectrique, par exemple Si02, Ta2O5 ou TiO2.

5. Dispositif selon l'une des revendications précédentes, dans lequel l'unité (7) de modification de la polarisation, notamment une lame lambda quart (λ/4), est tournée de 45° par rapport à la ligne d'intersection des surfaces sur lesquelles se trouvent les surfaces réfléchissantes (3).

6. Dispositif selon l'une quelconque des revendications précédentes, dans lequel l'unité de rotation (102 ; 202 ; 302) est précédée d'un séparateur de faisceau (8) qui est disposé sur le trajet du faisceau (105 ; 205) incident par rapport aux surfaces de réflexion (3) et du faisceau (104 ; 204 ; 304) sortant par rapport aux surfaces de réflexion (3) .

7. Dispositif selon la revendication 6, dans lequel une unité (9, 309) pour modifier la polarisation, en particulier une lame quart d'onde (λ/4), est disposée entre le séparateur de faisceau (8) et l'unité de rotation (102 ; 202).

8. Dispositif selon l'une des revendications précédentes, dans lequel le dispositif comprend une optique de focalisation et/ou d'élargissement (10) pouvant être traversée par le faisceau (104 ; 204 ; 304) émis par rapport aux surfaces de réflexion (3).

9. Utilisation d'un dispositif selon l'une des revendications 1 à 8 pour le perçage et/ou l'enlèvement de matière au moyen d'un rayonnement laser, dans lequel un faisceau incident (105 ; 205) est réfléchi dans une unité de rotation (102 ; 202) tournant autour d'un axe de rotation (1) sur deux surfaces de réflexion (3) perpendiculaires l'une à l'autre, et le faisceau sortant (104 ; 204) quitte l'unité de rotation (102 ; 202) dans la direction opposée au faisceau incident (105 ; 205) et le faisceau incident (105 ; 205) étant généré par une source de faisceau laser (300), en particulier pulsée, et/ou le faisceau incident (104 ; 204 ; 304) étant dirigé sur une pièce (400).

10. Utilisation selon la revendication 9, dans laquelle la polarisation du faisceau incident (105 ; 205) et du faisceau émergent (104 ; 204) est modifiée par une unité de modification de la polarisation (7), notamment une lame lambda quart (λ/4), disposée dans l'unité de rotation (202).

11. Utilisation selon la revendication 9 ou 10, dans laquelle la polarisation du faisceau incident (105 ; 205) et du faisceau émergent (104 ; 204 ; 304) est modifiée par une unité de modification de polarisation (9, 309) disposée à l'extérieur de l'unité de rotation (102 ; 202 ; 302), notamment une lame lambda quart (λ/4).

12. Utilisation selon l'une quelconque des revendications 9 à 11, dans laquelle le faisceau incident (105 ; 205) et le faisceau émergent (104 ; 204) rencontrent un séparateur de faisceau (8) qui dévie le faisceau émergent (104 ; 204) du faisceau incident (105 ; 205).

13. Procédé de montage d'un prisme de Porro (6) dans une unité de rotation (102 ; 202), **caractérisé par** les étapes suivantes :
- Fixation du prisme de Porro (6) dans une monture (12) ;
- Alignement de l'axe optique avec un collimateur par rapport à un axe de rotation (1) ;
- rotation de la monture (12) de manière à faire coïncider l'axe de symétrie mécanique de la monture (12) et l'axe optique ;
- notamment montage dans une broche.

14. Procédé selon la revendication 13, dans lequel
- une lunette d'autocollimation est orientée parallèlement à un axe de rotation (1), et
- le prisme de Porro (6) est orienté de telle sorte que le bord en toit (13) du prisme de Porro (6) est perpendiculaire à l'axe de rotation (1), le bord en toit (13) se trouve sur l'axe de rotation (1).
- et, en particulier, le prisme de Porro (6) est orienté de telle sorte que le centre de la monture (12) se trouve sur l'axe de rotation.
